# EUROPÄISCHE PATENTSCHRIFT

(11) **EP 2 050 980 B1**
(45) Veröffentlichungstag und Bekanntmachung des Hinweises auf die Patenterteilung: **24.05.2017**
(21) Anmeldenummer: 08017611.8
(22) Anmeldetag: 08.10.2008
(51) Int. Cl.: F16D 65/097

(54) **Bremsbelaghalterung einer Scheibenbremse sowie Bremsbelag**
Brake cover holder on a disk brake and brake cover
Fixation de garniture d'un frein à disques et garniture de frein

(30) Priorität: 18.10.2007 DE 102007049979
(43) Veröffentlichungstag der Anmeldung: 22.04.2009
(73) Patentinhaber: KNORR-BREMSE Systeme für Nutzfahrzeuge GmbH, 80809 München (DE)
(72) Erfinder: Pritz, Wolfgang, 94501 Aldersbach (DE); Camilo-Matinez, José, 82008 Unterhaching (DE)
(74) Vertreter: Mattusch, Gundula

(56) Entgegenhaltungen:
- DE-A1- 4 020 287
- DE-B3-102006 023 964
- DE-U1-202005 019 875
- FR-A1- 2 436 288
- JP-A- 63 227 452

## Beschreibung

Die Erfindung betrifft eine Bremsbelaghalterung einer Scheibenbremse gemäß dem Oberbegriff des Anspruchs 1 sowie einen Bremsbelag für eine Scheibenbremse.

Eine solche Bremsbelaghalterung ist aus der DE 40 20 287 A1 bekannt. Die darin geoffenbarte Konstruktion hat sich in der Praxis bewährt, insbesondere auch unter den vielfach rauen Betriebsbedingungen, denen Scheibenbremsen in Nutzfahrzeugen ausgesetzt sind.

Zur Positionssicherung der beiden Bremsbeläge sind diese jeweils mit einer Belaghaltefeder versehen, die als Blattfeder ausgebildet und im oberen, einer Montageöffnung des Bremssattels zugewandten Randbereich derart am Bremsbelag befestigt sind, dass sie von einem sich quer dazu, also in Achsrichtung der Bremsscheibe erstreckenden Belaghaltebügel unter Vorspannung gesetzt werden, wobei der Belaghaltebügel in zwei sich gegenüberliegenden, die Montageöffnung begrenzenden Bereichen des Bremssattels festgelegt ist.

Die Lagerung der Bremsbeläge unter Federspannung dient sowohl einem Toleranzausgleich wie einer Reduzierung bzw. einer Verhinderung der Entstehung von Klappergeräuschen, wie sie ansonsten im Fahrbetrieb des Fahrzeuges auftreten würden.

Die bekannte Bremsbelaghalterung ist dabei so ausgebildet, dass die jeweilige Belaghaltefeder an Haltelaschen des zugeordneten Bremsbelages befestigt ist, die entsprechende Ausnehmungen der Belaghaltefeder durchtreten, wobei diese in radialer Richtung gehalten wird und zwar so, dass ein selbsttätiges Lösen in entspannter oder teilentspannter Position ausgeschlossen ist.

Da zur Festlegung der Belaghaltefeder lediglich zwei Anbindungsstellen vorgesehen sind, die abständig zueinander angeordnet sind, wird die Belaghaltefeder auch als Griff benutzt und dabei mittig gefasst, so dass sie im Sinne eines zweiseitig eingespannten Trägers fungiert, mit der Neigung einer entsprechend starken Durchbiegung. Diese kann unter Umständen die Federcharakteristik der Belaghaltefeder verändern, was sich dann nachteilig auf deren Funktion auswirkt.

Eine Beeinflussung der Federcharakteristik in einem nicht vorhersehbaren Umfang ergibt sich auch aus einer geometriebedingten Wärmebelastung der Belaghaltefeder durch beim Bremsen entstehende Reibungswärme.

Eine Beeinträchtigung der Funktionsfähigkeit der Belaghaltefedern kann sich daneben durch deren Blattform ergeben, da die Belaghaltefedern mit ihrer Breitseite am Belaghaltebügel anliegen, was bei einer bremsbedingten Verschiebung der Bremsbeläge zu einem entsprechend hohen Reibungswiderstand führt.

In der FR 2 436 288 A1 ist ein Bremsbelag geoffenbart mit einer Belaghaltefeder, die verliergesichert durch Umwickeln an einem vorstehenden Vorsprung gehalten ist, wobei zwei freie Schenkel der Belaghaltefeder dazu gedacht sind, sich in eingebauter Stellung an einem Bremssattel abzustützen.

Der Erfindung liegt die Aufgabe zugrunde, eine Bremsbelaghalterung der gattungsgemäßen Art bzw. einen Bremsbelag so weiterzuentwickeln, dass eine kostengünstigere Herstellung möglich ist, die Standzeit insbesondere der Belaghaltefedern erhöht und die Funktionssicherheit der Scheibenbremse insgesamt verbessert wird.

Diese Aufgabe wird durch eine Bremsbelaghalterung mit den Merkmalen des Anspruchs 1 bzw. einen Bremsbelag mit den Merkmalen des Anspruchs 17 gelöst.

Diese Ausgestaltung der Belaghaltefeder führt zu einer ganzen Reihe von Vorteilen, sowohl in wirtschaftlicher wie auch in funktioneller Hinsicht.

So ist die Herstellung der neuen Belaghaltefedern kostengünstiger als die der bislang eingesetzten, wozu insbesondere eine vereinfachte Befestigung am jeweils zugeordneten Bremsbelag zählt. Dabei kann auf die Ausstanzung von Durchbrechungen verzichtet werden, in die bislang die Haltelaschen des jeweiligen Bremsbelages eingreifen.

Da Bremsbelaghalterungen als Bestandteil von Scheibenbremsen in großen Stückzahlen zum Einsatz kommen, kommt der vereinfachten und daraus sich ergebenden kostenmindernden Herstellung eine besondere Bedeutung zu.

Daneben ist die verbesserte Funktionssicherheit der Bremsbelaghalterung als besonderer Vorteil der Erfindung hervorzuheben, die sich durch eine reduzierte Wärmebeaufschlagung der Belaghaltefedern ergibt. Diese resultiert vor allem aus der nun gegebenen Geometrie der Belaghaltefeder, insbesondere des Querschnitts, der bevorzugt rund ist, alternativ jedoch auch oval oder polygon sein kann.

Aus dieser geringeren Wärmebeaufschlagung minimiert sich die Gefahr von Federbrüchen, mit der Folge einer erhöhten Standzeit der Belaghaltefedern.

Bezüglich der Befestigung der Belaghaltefeder an der Belagträgerplatte ist die Belaghaltefeder an beiden Enden mit abgewinkelten Schenkeln versehen, die jeweils in einer zugeordneten Ausnehmung der Belagträgerplatte geführt sind, wobei zumindest eine Ausnehmung im Sinne eines Langloches ausgebildet ist, so dass eine Längserstreckung bei einer Durchbiegung der Belaghaltefeder problemlos möglich ist.

Dabei sind die abgewinkelten Schenkel in Achsrichtung der Bremsscheibe verlaufend und mittels geeigneter Sicherungsmittel an der Belagträgerplatte gehalten.

Die Ausnehmungen zur Durchführung der abgewinkelten Schenkel in der Belagträgerplatte sind in daran angeformten Laschen vorgesehen, die in ihrer
Dicke so bemessen sind, dass die geführten Schenkel der Belaghaltefeder in ausreichender Länge an der Wandung der Ausnehmung anliegen, wobei die einander zugeordneten Abmaße des Querschnitts des jeweiligen Schenkels einerseits und der Breite bzw. des Durchmessers der Ausnehmung andererseits mit geringem Spiel einander entsprechen.

Durch eine Gestaltung der Verlaufsgeometrie der Ausnehmungen kann die Federkennlinie der Belaghaltefeder beeinflusst werden. Die Ausnehmungen können hierzu in ihrem Verlauf als Langlöcher waagerecht, konvex, entsprechend dem konvexen Verlauf der Oberkante der Belagträgerplatte oder in Kurvenform nach außen hin ansteigend oder abfallend ausgebildet sein.

Denkbar ist auch, den der Belaghaltefeder zugeordneten Randbereich der Belagträgerplatte, an der die Belaghaltefeder befestigt ist, durch entsprechende Formgebung, beispielsweise im Sinne einer Rampe, eines Höckers oder einer Delle Einfluss auf die Federkennlinie der sich daran abstützenden Belaghaltefeder zu nehmen.

Die genannte Führung der Schenkel der Belaghaltefeder in der jeweils zugeordneten Ausnehmung der Belagträgerplatte verhindert ebenso ein Kippen der Belaghaltefeder wie deren erfindungsgemäß vorgesehene Ausbauchung im Mittenbereich, die quer zur radial federnden Auslenkrichtung geformt ist und an der der Belaghaltebügel anliegt. Diese Ausbauchung, die sich vorteilhafterweise ausgehend von der dem Reibbelag abgewandten Rückseite der Belagträgerplatte hin zum Reibbelag erstreckt, bildet durch ihre eine gedachte Fläche einschließende Kontur ein Auflager, mittels dessen sich die Belaghaltefeder in ausreichender Weise gegen ein Abkippen gesichert an dem Belaghaltebügel abstützt.

Nach einer vorteilhaften Weiterbildung der Erfindung ist vorgesehen, den der Belaghaltefeder zugeordneten Randbereich der Belagträgerplatte mit zwei abständig zueinander angeordneten Höckern zu versehen, zwischen denen die Ausbauchung der Belaghaltefeder positioniert ist.

Die in Bezug auf die Beeinflussung der Federkennlinie bereits erwähnte, an der Belagträgerplatte angeformte Rampe kann an den Höckern vorgesehen sein, an denen sich dann die Belaghaltefeder bereichsweise abstützt, wobei diese Rampen zur Rückseite der Belagträgerplatte hin abfallen.

Bei den bisher eingesetzten als Blattfedern ausgebildeten Belaghaltefedern besteht die Gefahr, dass durch die Verschiebekraft des Bremssattels auf den Bremsträger sowie durch das Niederhalten des Bremsbelages die Belaghaltefeder im Betriebsfall auf Block verformt wird, d.h., dass sie durch spielfreie Anlage auf dem Rand der Belagträgerplatte ihrer Federfunktion nicht mehr nachkommen kann. In diesem Fall ist sie praktisch zwischen dem Belaghaltebügel und der Belagträgerplatte eingespannt. Dies kann zu einer Beschädigung der Belaghaltefeder führen mit der Gefahr eines frühzeitigen Bruchs.

Diesem Missstand wirken die angeformten Höcker der Belagträgerplatte entgegen, die, wie erwähnt, zwischen sich die Belaghaltefeder im Bereich ihrer Ausbauchung aufnehmen. Der Belaghaltebügel hingegen stützt sich in einer betriebsbedingten Endstellung auf den Höckern ab, deren Höhe größer ist als das zugeordnete Querschnittsabmaß der Belaghaltefeder, so dass diese nicht auf Block gedrückt werden kann.

Grundsätzlich besteht die Möglichkeit, lediglich einen Höcker vorzusehen, der dann von der Ausbauchung entsprechend umgeben ist und an dem sich der Belaghaltebügel abstützen kann.

Prinzipiell denkbar ist, dass diese konstruktive Ausbildung auch bei einem Bremsbelag zum Einsatz kommt, dessen Belaghaltefeder nicht aus einem Federdraht besteht, sondern, wie bisher, aus einer Blattfeder, wobei dann diese Blattfeder entsprechende Aussparungen aufweist, die von den Höckern durchtreten werden.

Vorzugsweise wird die aus Federdraht bestehende Belaghaltefeder unlösbar mit der Belagträgerplatte verbunden. Dies kann durch eine endseitig aufgesteckte Scheibe erfolgen, die durch Formschluss, wie Verquetschen oder eine andere Verformung oder durch Stoffschluss wie Verschweißen derart angeschlossen ist, dass die Belaghaltefeder nur durch Zerstörung dieser Verbindung gelöst werden kann. Hierdurch wird eine die Betriebssicherheit der Bremsbelaghalterung herabsetzende Mehrfachverwendung der Belaghaltefeder wirksam verhindert.

Zur Verbesserung der Betriebssicherheit trägt auch bei, wie nach einem weiteren vorteilhaften Gedanken der Erfindung vorgesehen, den Belaghaltebügel so zu modifizieren, dass seine Funktion nur mit solchen Bremsbelägen gewährleistet ist, die die geforderten Eigenschaften aufweisen. Im weitesten Sinne handelt es sich dabei also um eine Kodierung, die beispielsweise durch vorstehende, durch Prägen oder Stanzen hergestellte Nasen erreicht wird, die mit daran angepassten Ausnehmungen der Bremsbeläge, insbesondere der Belagträgerplatten korrespondieren. So ist gewährleistet, dass nur die für einen bestimmten Bremsentyp geeigneten Bremsbeläge montiert werden können.

Um die Umgehung dieser Sicherungsmaßnahmen zu verhindern, indem beispielsweise ein Belaghaltebügel verwendet wird, der diese Ausprägungen nicht aufweist, so dass für die entsprechende Bremse ein nicht geeigneter Bremsbelag zum Einsatz kommen kann, kann auch der Belaghaltebügel im Verbindungsbereich mit dem Bremssattel so gestaltet sein, dass ausschließlich der vorgesehene, d.h., der geeignete Belaghaltebügel zum Einsatz kommen kann. Hierzu kann der Belaghaltebügel endseitig so geformt sein, dass er ausschließlich in dieser Ausgestaltung in eine Aufnahmeöffnung des Bremssattels einsteckbar ist.

Üblicherweise ist für die Aufnahme des Belaghaltebügels im Bremssattel eine Tasche eingeformt, die einen rechteckigen Querschnitt aufweist und mittels eines Kerns beim Gießen des aus Guss bestehenden Bremssattels hergestellt ist.

Zur Realisierung der Erfindung kann der Kern mit einem Wechseleinsatz konstruiert sein, wodurch die Formgebung der Tasche und damit der Quasi-Kodierschlüssel kostenneutral herstellbar ist.

Die Querschnittsgeometrie der Tasche ebenso wie des daran angepassten Belaghaltebügels kann prinzipiell beliebig gestaltet sein. Beispielhaft seien hier eine Schräge und ein Radius angeführt, die ein- oder zweiseitig ausgebildet sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Bremsbelaghalterung einer Scheibenbremse in einer Draufsicht

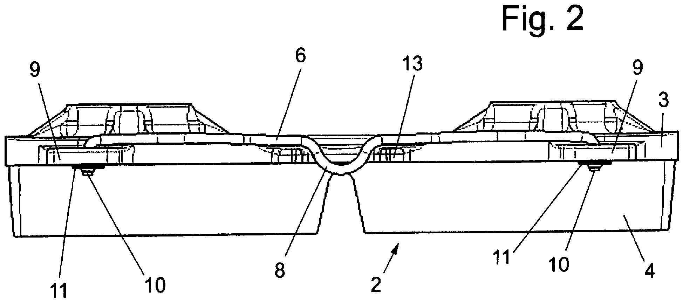

- Figuren 2 - 8: verschiedene Ausführungsbeispiele eines erfindungsgemäßen Bremsbelages in unterschiedlichen Ansichten
- Figur 9: einen Teilausschnitt eines Bremsbelages in einer Vorderansicht
- Figur 10: einen Teilausschnitt der Bremsbelaghalterung in einer Vorderansicht
- Figur 11: einen Teilausschnitt der Bremsbelaghalterung in einer Draufsicht
- Figur 12: einen Querschnitt durch die Bremsbelaghalterung gemäß der Linie XII - XII in Figur 1 als Teilausschnitt

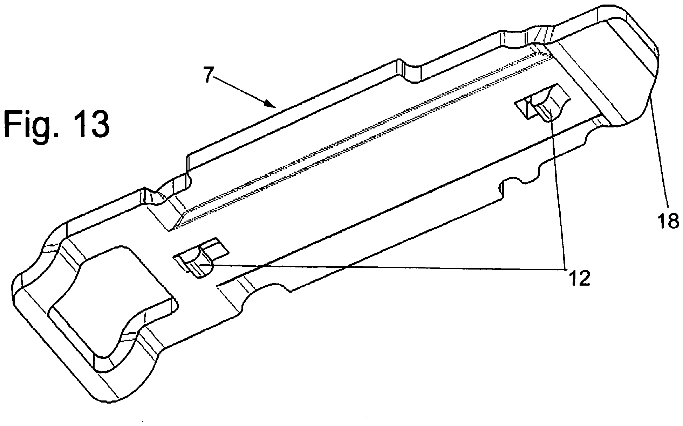

- Figur 13: eine Einzelheit der Bremsbelaghalterung in einer perspektivischen Unteransicht.

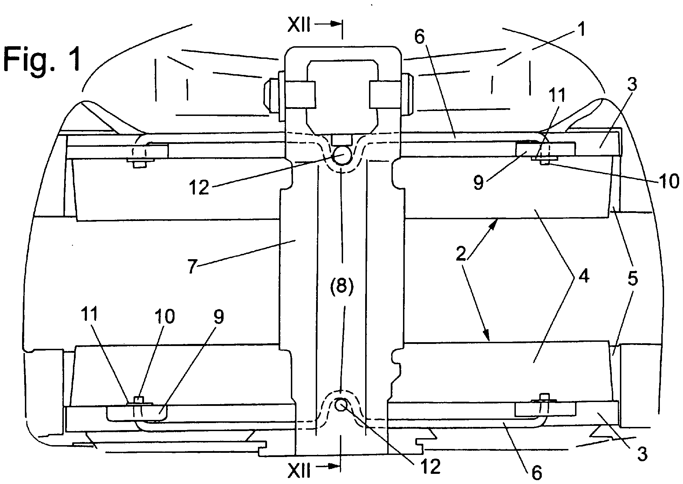

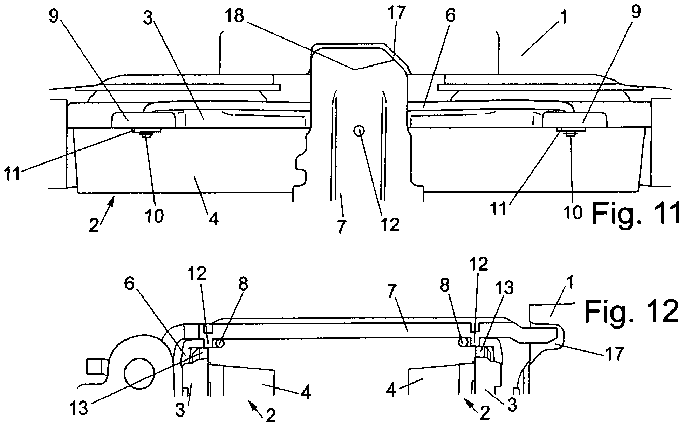

In der Figur 1, ebenso wie in einem Teilausschnitt in der Figur 11 ist eine Bremsbelaghalterung einer Scheibenbremse, insbesondere für Nutzfahrzeuge dargestellt, zur Halterung von zwei Bremsbelägen 2, die federbelastet jeweils in einem Belagschacht 5 eines Bremssattels 1 gelagert und im Fall einer Bremsung beidseitig an eine nicht dargestellte Bremsscheibe anpressbar sind.

Jeder Bremsbelag 2 besteht aus einer Belagträgerplatte 3 sowie einem darauf befestigten, in Funktion die Bremsscheibe kontaktierenden Reibbelag 4.

Um den jeweiligen Bremsbelag 2 federbelastet in den Belagschacht 5 zu drücken, weist jeder Bremsbelag 2 eine Belaghaltefeder 6 auf, die an der entsprechenden Belagträgerplatte 3 befestigt ist und die sich unter Vorspannung an einem Belaghaltebügel 7 abstützt, der mit beiden Enden am Bremssattel 1 befestigt ist und eine Montageöffnung des Bremssattels 1 quer zur Längserstreckung des Bremsbelages 2 überspannt.

Erfindungsgemäß ist die Belaghaltefeder 6 aus einem Federdraht hergestellt und im Mittenbereich quer zur federnden Auslenkrichtung zu einer Ausbauchung 8 geformt, an der der Belaghaltebügel 7 anliegt. Dabei verläuft die gebildete Oberseite der Belaghaltefeder 6 parallel zur anliegenden Andruckseite des Belaghaltebügels 7, so dass die Belaghaltefeder 6 über einen größeren Abstützbereich anliegt.

An beiden Enden ist die Belaghaltefeder 6 mit einem abgewinkelten Schenkel 10 versehen, der jeweils in einer Lasche 9 der Belagträgerplatte 3 gehalten ist, die an der dem Belaghaltebügel 7 zugewandten Randseite der Belagträgerplatte 3 angeformt sind.

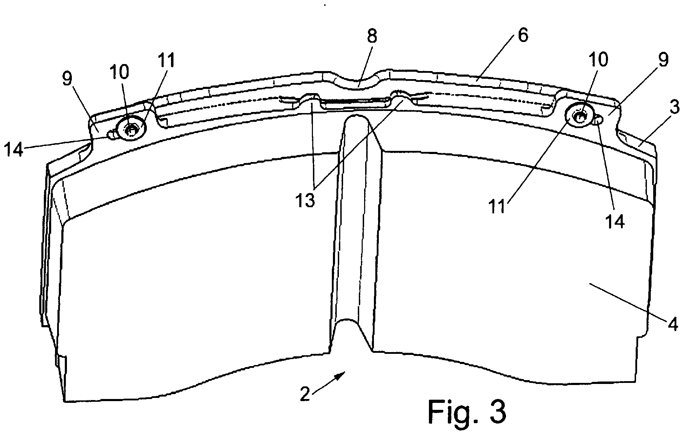

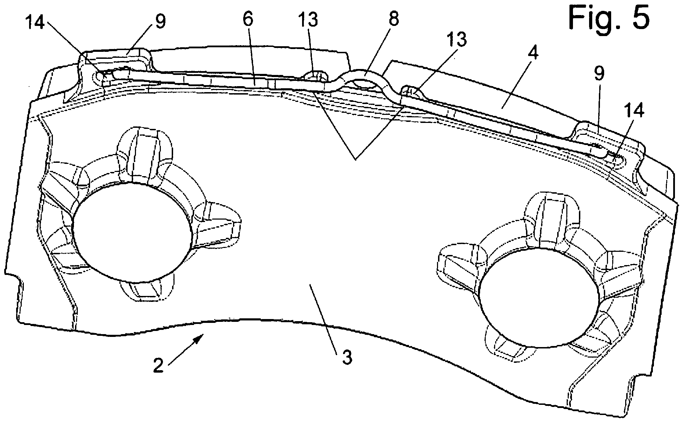

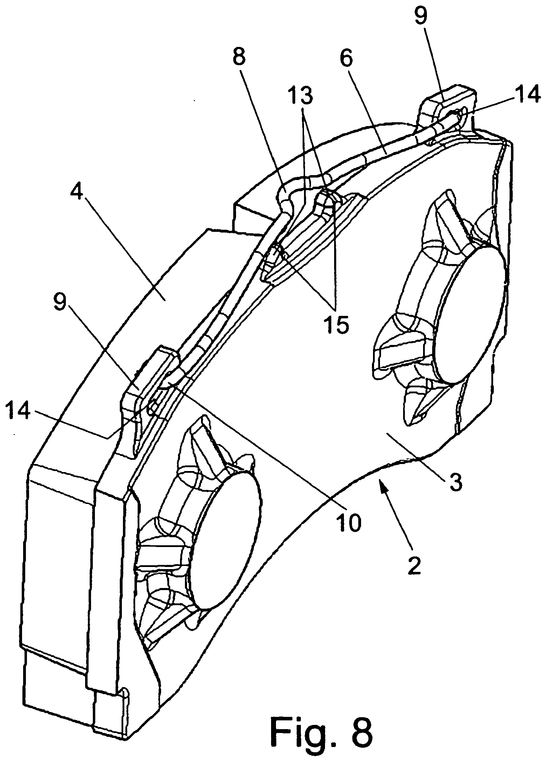

Wie besonders deutlich in den Figuren 3 und 5 bis 8 zu erkennen ist, ist die Belaghaltefeder 6 längs verschieblich in den Laschen 9 gelagert, so dass eine Längenveränderung der gedachten Sehne beim Zusammendrücken der Belaghaltefeder 6 problemlos ausgeglichen wird.

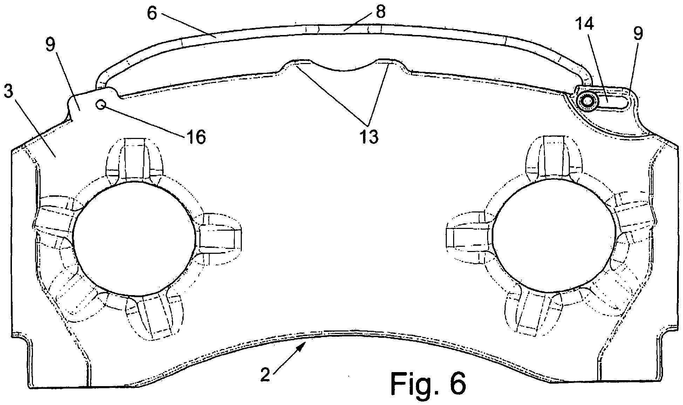

Dabei können beide Laschen 9 mit Langlöchern 14 versehen sein, wie dies in den Figuren 3, 5 und 8 dargestellt ist. Denkbar ist aber auch, lediglich eine Lasche 9 mit einem Langloch 14 zu versehen, entsprechend der Figur 6, und die andere Lasche 9 mit einer Bohrung 16.

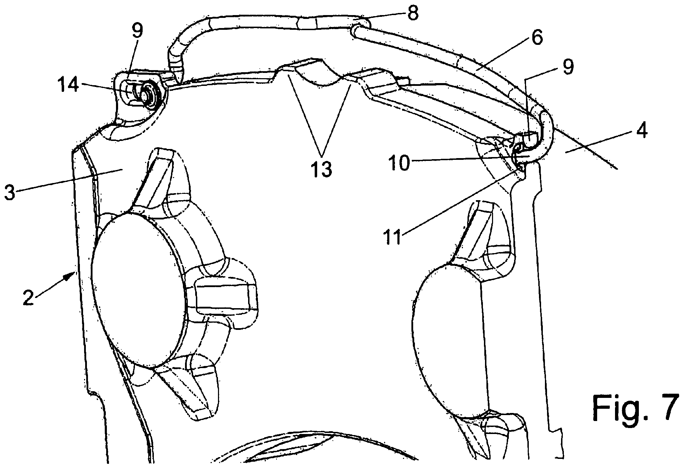

Zur Sicherung der Belaghaltefeder 6 sind die abgewinkelten Schenkel 10 mit Sicherungselementen gehalten, die z.B. aus einer Schraube, einem Splint oder einem anderen Verbindungselement bestehen. Bevorzugt besteht das Sicherungselement aus beispielsweise einer Scheibe 11, mit einem umlaufenden Bündchen (Figur 7), das nach der Montage der Belaghaltefeder 6 auf dem Schenkel 10 verquetscht, verstemmt oder mit dem Schenkel 10 verschweißt wird.

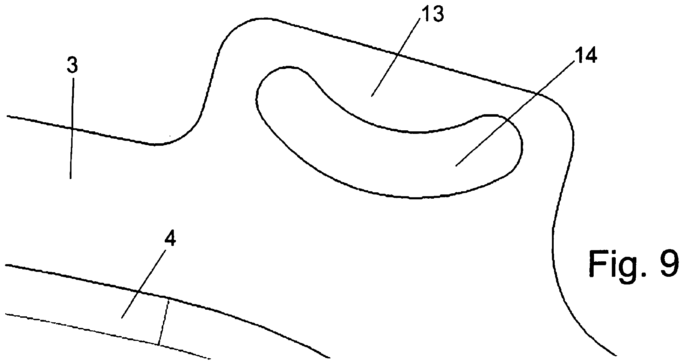

Zur definierten Beeinflussung der Federkennlinie der Belaghaltefeder 6 können die Langlöcher 14 in bestimmter Form ausgebildet sein. Ein Beispiel hierzu ist in der Figur 9 dargestellt. Darin ist zu erkennen, dass das Langloch 14 kreisbogenförmig ausgebildet ist, wobei die konkave Form nach außen weist, d.h., die beiden Enden des Langloches 14 nach außen hin ansteigen.

Beidseitig der Ausbauchung 8, die in den dargestellten Ausführungsbeispielen in Richtung des Reibbelages 4 weist, sind an den zugeordneten Rand der Belagträgerplatte 3 Höcker 13 angeformt, deren Höhe größer ist als das zugeordnete Querschnittsabmaß der Belaghaltefeder 6.

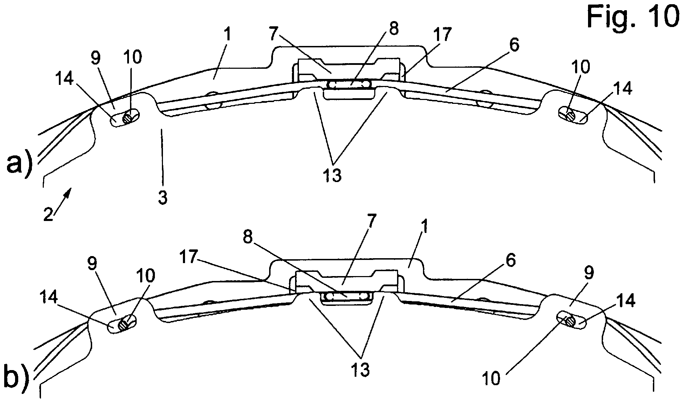

Diese Höcker 13 dienen zum einen der seitlichen Begrenzung des Verschiebeweges der Belaghaltefeder 6 bei einem Zusammendrücken und zum anderen der Auflage des Belaghaltebügels 7, durch die verhindert wird, dass die Belaghaltefeder 6 im Bereich der Ausbauchung 8 praktisch zwischen der Belagträgerplatte 3 und der Unterseite des Belaghaltebügels 7 eingeklemmt wird und sozusagen auf Block gehalten wird. Besonders deutlich ist dies in der Figur 10 zu erkennen, bei der die Figur a) eine teilgespannte Stellung der Belaghaltefeder 6 wiedergibt, während in der Figur b) eine sogenannte vollgespannte Position der Belaghaltefeder 6 dargestellt ist, in der der Belaghaltebügel 7 an den Höckern 13 anliegt.

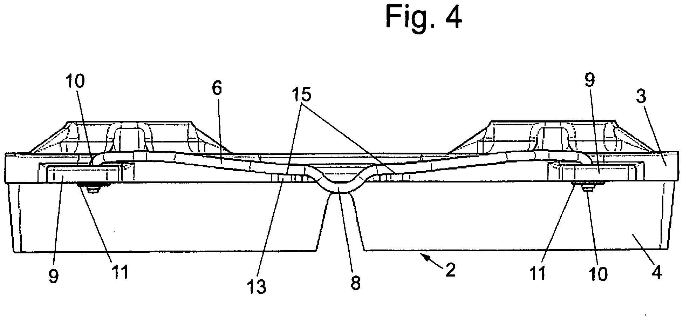

Bei dem in den Figuren 4, 5 und 8 erkennbaren Ausführungsbeispiel des Bremsbelages weisen die Höcker 13 auf ihrer dem Reibbelag 4 abgewandten Rückseite jeweils eine Rampe 15 auf, die am freien Ende der Höcker 13 in Richtung der Belagträgerplatte 3 im Übrigen hin abfällt. Vor allem in der Figur 4, die eine Draufsicht auf den Bremsbelag 2 wiedergibt, ist die Abstützung der Belaghaltefeder 6 an der Rampe 15 zu erkennen, durch die, je nach Anlage an den Rampen 15 die Federkennlinie beeinflusst wird. Insoweit stellt diese Maßnahme eine Ergänzung oder Alternative zur Beeinflussung der Kennlinie durch die Formgebung der Langlöcher 14 dar.

In den Figuren 11 und 12 ist zu erkennen, dass der Belaghaltebügel 7 mit einem Ende in einer im Bremssattel 1 vorgesehenen Tasche 17 einliegt. Dabei weist sowohl die Tasche 17 wie auch das eingesteckte Ende des Belaghaltebügels 7 eine seitliche Schräge 18 auf, die praktisch eine Kodierung bildet, durch die sichergestellt wird, dass nur der dafür bestimmte Belaghaltebügel 7 einsetzbar ist.

Weiter ist der Belaghaltebügel 7 durch Ausstanzen oder Prägen in den Überdeckungsbereichen mit den Bremsbelägen 2 jeweils mit einer sich in Richtung des zugeordneten Bremsbelages 2 erstreckenden Nase 12 versehen, die in den durch die Ausbauchung 8 der Belaghaltefeder 6 eingegrenzten Bereich eintaucht, wodurch sichergestellt ist, dass nur für diesen Bremsentyp geeignete Bremsbeläge 2 eingesetzt werden, während eine Verspannung mittels des Belaghaltebügels 7 bei einem Bremsbelag 2, der nicht dieser Ausführung entspricht, ausgeschlossen ist.

### Bezugszeichenliste

- 1: Bremssattel
- 2: Bremsbelag
- 3: Belagträgerplatte
- 4: Reibbelag
- 5: Belagschacht
- 6: Belaghaltefeder
- 7: Belaghaltebügel
- 8: Ausbauchung
- 9: Lasche
- 10: Schenkel
- 11: Scheibe
- 12: Nase
- 13: Höcker
- 14: Langloch
- 15: Rampe
- 16: Bohrung
- 17: Tasche
- 18: Schräge

## Patentansprüche

1. Bremsbelaghalterung einer Scheibenbremse, insbesondere für Nutzfahrzeuge, wobei beidseitig einer Bremsscheibe zwei federbelastet in einem Belagschacht (5) eines ortsfesten Bremsträgers oder Bremssattels (1) gelagerte Bremsbeläge (2) zugeordnet sind, die jeweils eine Belaghaltefeder (6) aufweisen, die radial auslenkbar an einer einen Reibbelag (4) tragenden Belagträgerplatte (3) des jeweiligen Bremsbelages (2) gehalten sind, und die sich unter Vorspannung an einem am Bremssattel (1) festgelegten Belaghaltebügel (7) abstützen, wobei jede Belaghaltefeder (6) aus einem Federdraht geformt ist,
**dadurch gekennzeichnet, dass**
jede Belaghaltefeder (6) verliergesichert an der Belagträgerplatte (3) gehalten ist und im Mittenbereich eine quer zur federnden Auslenkrichtung geformte Ausbauchung (8) aufweist, an der der Belaghaltebügel (7) anliegt, wobei jede Belaghaltefeder (6) an ihren beiden Enden jeweils einen abgewinkelten, in einer an der dem Belaghaltebügel (7) zugewandten Randbereich der Belagträgerplatte (3) angeordneten Lasche (9)' gehaltenen Schenkel (10) aufweist.

2. Bremsbelaghalterung nach Anspruch 1, **dadurch gekennzeichnet, dass** auf der der Belaghaltefeder (6) zugewandten Randseite der Belagträgerplatte (3) mindestens ein Höcker (13) vorgesehen ist, der mit der Ausbauchung (8) korrespondiert.

3. Bremsbelaghalterung nach Anspruch 1 oder 2, **dadurch gekennzeichnet, dass** der Höcker (13) höher ist als das zugeordnete Querschnittsabmaß der Belaghaltefeder (6).

4. Bremsbelaghalterung nach Anspruch 2 oder 3, **dadurch gekennzeichnet, dass** zwei Höcker (13) vorgesehen sind, zwischen denen die Ausbauchung (8) einliegt.

5. Bremsbelaghalterung nach einem der Ansprüche 2 bis 4, **dadurch gekennzeichnet, dass** die Höcker (13) jeweils eine Rampe (15) aufweisen, an denen die Belaghaltefeder (6) anliegt.

6. Bremsbelaghalterung nach Anspruch 5, **dadurch gekennzeichnet, dass** die Rampen (15) vom freien Ende der Höcker (13) her in Richtung der Belagträgerplatte (3) im Übrigen abfallend verlaufen.

7. Bremsbelaghalterung nach Anspruch 1, **dadurch gekennzeichnet, dass** zumindest eine Lasche (9) mit einem Langloch (14) versehen ist, in dem der zugeordnete Schenkel (10) verschiebbar geführt ist.

8. Bremsbelaghalterung nach Anspruch 7, **dadurch gekennzeichnet, dass** zur Veränderung der Federkennlinie der Belaghaltefeder (6) das jeweilige Langloch (14) waagerecht oder kurvenförmig verläuft.

9. Bremsbelaghalterung nach einem der Ansprüche 7 oder 8, **dadurch gekennzeichnet, dass** das Langloch (14) kreisbogenförmig verläuft und mit seiner konkaven Seite zur Außenseite der Lasche (9) hin ausgerichtet ist.

10. Bremsbelaghalterung nach einem der Ansprüche 7 bis 9, **dadurch gekennzeichnet, dass** die Breite des Langloches (14) etwa dem zugeordneten Querschnittsabmaß des Schenkels (10) entspricht.

11. Bremsbelaghalterung nach einem der Ansprüche 1 bis 10, **dadurch gekennzeichnet, dass** die Belaghaltefeder (6) mit Sicherungselementen an den Laschen (9) gehalten ist, die form- oder stoffschlüssig an den Schenkeln (10) befestigt sind.

12. Bremsbelaghalterung nach einem der Ansprüche 2 bis 6, **dadurch gekennzeichnet, dass** die Belaghaltefeder (6) an der dem Reibbelag (4) abgewandten Seite an den Höckern (13) anliegt.

13. Bremsbelaghalterung nach Anspruch 1, **dadurch gekennzeichnet, dass** sich die Ausbauchung (8) in Richtung des Reibbelages (4) erstreckt.

14. Bremsbelaghalterung nach Anspruch 1, **dadurch gekennzeichnet, dass** der Belaghaltebügel (7) im Überdeckungsbereich mit den Belaghaltefedern (6) jeweils mit mindestens einer Nase (12) versehen ist, die in den durch die Ausbauchung (8) begrenzten Raum ragen.

15. Bremsbelaghalterung nach Anspruch 1, **dadurch gekennzeichnet, dass** der Belaghaltebügel (7) an einem, in eine Tasche (17) des Bremssattels (1) eingesteckten Ende im Sinne einer Kodierung geformt ist, das mit der daran angepassten Tasche (17) korrespondiert.

16. Bremsbelaghalterung nach Anspruch 15, **dadurch gekennzeichnet, dass** das in der Tasche (17) einliegende Ende des Belaghaltebügels (7) eine an der Längsseite angeordnete Schräge (18) aufweist, während die Tasche (17) im zugeordneten Bereich daran angepasst abgeschrägt ist.

17. Bremsbelag für eine Scheibenbremse, insbesondere eines Nutzfahrzeuges, mit einer Belagträgerplatte (3), einem damit verbundenen Reibbelag (4) sowie einer an einer Randseite der Belagträgerplatte (3) gehaltenen Belaghaltefeder (6), wobei die Belaghaltefeder (6) aus einem Federdraht hergestellt ist,
**dadurch gekennzeichnet, dass**
die Belaghaltefeder (6) verliergesichert an der Belagträgerplatte (3) gehalten ist und im Mittenbereich eine quer zur federnden Auslenkrichtung geformte Ausbauchung (8) aufweist und dass an der Belagträgerplatte (3) Laschen (9) angeformt sind, in denen endseitig abgewinkelte Schenkel (10) der Belaghaltefeder (6) gelagert sind.

18. Bremsbelag nach Anspruch 17, **dadurch gekennzeichnet, dass** die Belagträgerplatte (3) auf ihrer der Belaghaltefeder (6) zugewandten Randseite mindestens einen Höcker (13) aufweist.

19. Bremsbelag nach Anspruch 17 oder 18, **dadurch gekennzeichnet, dass** zwei abständig zueinander angeordnete Höcker (13) vorgesehen sind, zwischen denen die Ausbauchung (8) einliegt.

20. Bremsbelag nach einem der Ansprüche 17 bis 19, **dadurch gekennzeichnet, dass** die Höcker (13) an einer Seite mit einer Rampe (15) versehen sind, die ausgehend von ihrem freien Ende in Richtung der Belagträgerplatte (3) im Übrigen abfallen.

21. Bremsbelag nach Anspruch 17, **dadurch gekennzeichnet, dass** mindestens eine der Laschen (9) ein sich in Längsrichtung der Belaghaltefeder (6) erstreckendes Langloch (14) aufweist.

22. Bremsbelag nach Anspruch 17, **dadurch gekennzeichnet, dass** die Höhe der Höcker (13) größer ist als das zugeordnete Querschnittsabmaß der Belaghaltefeder (6).

23. Bremsbelag nach Anspruch 17, **dadurch gekennzeichnet, dass** sich die Ausbauchung (8) in Richtung des Reibbelages (4) erstreckt.

24. Bremsbelag nach Anspruch 20, **dadurch gekennzeichnet, dass** die Rampen (15) auf der dem Reibbelag (4) abgewandten Seite der Höcker (13) vorgesehen sind.

## Claims

1. A brake pad support of a disc brake, in particular for utility vehicles, wherein on both sides of a brake disc, two brake pads (2) that are mounted in a spring-loaded state in a pad take-up (5) of a stationary brake carrier or brake caliper (1), are allocated, which each comprise a pad holding spring (6) which are held to be radially deflectable on a pad carrier plate (3) associated to the respective brake pad (2) and carrying a friction pad (4), and which, when under pre-tension, support against a pad holding bracket (7) fixed to the brake caliper (1), wherein each pad holding spring (6) is formed of a spring wire,
**characterized in that**
each pad holding spring (6) is held on the pad carrier plate (3) in a captive manner and comprises, in the central area, a bulge (8) formed transversely to the resilient deflection direction, against which the pad holding bracket (7) rests, wherein each pad holding spring (6) comprises an angled leg (10) at both ends thereof that is held in a tab (9) arranged in an edge area of the pad carrier plate (3) facing the pad holding bracket (7).

2. The brake pad support according to claim 1, **characterized in that**, on the edge side of the pad carrier plate (3) facing the pad holding spring (6), at least one protuberance (13) corresponding to the bulge (8) is provided.

3. The brake pad support according to claim 1 or 2, **characterized in that** the protuberance (13) is higher than the pad holding spring's (6) associated cross-sectional dimension.

4. The brake pad support according to claim 2 or 3, **characterized in that** two protuberances (13) are provided with the bulge (8) being interposed.

5. The brake pad support according to any one of claims 2 to 4, **characterized in that** the protuberances (13) each comprise a ramp (15) against which the pad holding spring (6) rests.

6. The brake pad support according to claim 5, **characterized in that** the ramps (15) slope incidentally from the free end of the bulges (13) in the direction of the pad carrier plate (3).

7. The brake pad support according to claim 1, **characterized in that** at least one tab (9) is provided with an oblong hole (14) in which the associated leg (10) is guided to be displaceable.

8. The brake pad support according to claim 7, **characterized in that**, for changing des pad holding spring's (6) spring characteristics, the respective oblong hole (14) is of horizontal or curvilinear extension.

9. The brake pad support according to any one of claims 7 or 8, **characterized in that** the oblong hole (14) is of circular arc extension and oriented toward the tab's (9) outer side with its concave side.

10. The brake pad support according to any one of claims 7 to 9, **characterized in that** the width of the oblong hole (14) corresponds approximately to the associated leg's (10) cross-sectional dimension.

11. The brake pad support according to any one of claims 1 to 10, **characterized in that** the pad holding spring (6) is held on the tabs (9) by securing elements which are attached to the legs (10) in a form-fit or material-fit manner.

12. The brake pad support according to any one of claims 2 or 6, **characterized in that** the pad holding spring (6) rests against the protuberances (13) on the side facing away from the friction pad (4).

13. The brake pad support according to claim 1, **characterized in that** the bulge (8) extends toward the friction pad (4).

14. The brake pad support according to claim 1, **characterized in that** the pad holding bracket (7), in the area overlapping with the pad holding springs (6), is in each case provided with at least one lug (12) projecting into the space delimited by the bulge (8).

15. The brake pad support according to claim 1, **characterized in that** the pad holding bracket (7), at an end inserted into a pocket (17) of the brake caliper (1) is formed in terms of a coding means corresponding to the pocket (17) that is adapted thereto.

16. The brake pad support according to claim 15, **characterized in that** the end of the pad holding bracket (7) inserted into the pocket (17) comprises a chamfer (18) arranged on the longitudinal side, while the pocket (17) is chamfered in the associated area in adaptation thereto.

17. A brake pad for a disc brake, in particular of a utility vehicle, having a pad carrier plate (3), a friction pad (4) connected thereto, as well as a pad holding spring (6) held on an edge side of the pad carrier plate (3), wherein the pad holding spring is made of a spring wire,
**characterized in that**
the pad holding spring (6) is held on the pad carrier plate (3) in a captive manner and comprises, in the central area, a bulge (8) formed transversely to the resilient deflection direction, and that tabs (9) are molded on the pad carrier plate (3) in which terminally angled legs (10) of the pad holding spring (6) are mounted.

18. The brake pad according to claim 17, **characterized in that** the pad carrier plate (3), on its edge side facing the pad holding spring (6), comprises at least one protuberance (13).

19. The brake pad according to claim 17 or 18, **characterized in that** two protuberances (13) are provided to be spaced from one another with the bulge (8) being interposed.

20. The brake pad according to any one of claims 17 to 19, **characterized in that** the protuberances (13) are provided with a ramp (15) on one side, the ramps (15) sloping incidentally from their free end in the direction of the pad carrier plate (3).

21. The brake pad according to claim 17, **characterized in that** at least one of the tabs (9) comprises an oblong hole (14) extending in the pad holding spring's (6) longitudinal direction.

22. The brake pad according to claim 17, **characterized in that** the protuberances' (13) height is higher than the pad holding spring's (6) associated cross-sectional dimension.

23. The brake pad according to claim 17, **characterized in that** the bulge (8) extends toward the friction pad (4).

24. The brake pad according to claim 20, **characterized in that** the ramps (15) are provided on the side of the protuberances (13) facing away from the friction pad (4).

## Revendications

1. Fixation de garniture de frein d'un frein à disque, en particulier pour véhicules utilitaires, sachant qu'aux deux côtés d'un disque de frein sont associées deux garnitures de frein (2) qui sont logées sous contrainte de ressort dans un fût de garniture (5) d'un porte-disque ou d'un étrier de disque (1) fixe, qui présentent chacune un ressort de retenue de garniture (6), les ressorts de retenue de garniture (6) étant maintenus de manière à pouvoir être déviés radialement au niveau d'une plaque porte-garniture (3) portant une garniture de friction (4) de la garniture de frein (2) respective, et s'appuyant sous précontrainte à un arceau de retenue de garniture (7) fixé au niveau d'un étrier de frein (1), sachant que chaque ressort de retenue de garniture (6) est formé à partir d'un fil de ressort,
**caractérisé en ce que**
chaque ressort de retenue de garniture (6) est maintenu au niveau de la plaque porte-garniture (3) de manière à ne pas pouvoir se perdre et présente dans la zone du milieu un renflement (8) formé perpendiculairement à la direction de déviation à amortir et contre lequel l'arceau de retenue de garniture (7) est placé, sachant que chaque ressort de retenue de garniture (6) présente à chacune de ses deux extrémités une branche (10) coudée maintenue dans une languette (9) disposée au niveau de la zone de bordure tournée vers l'arceau de maintien de garniture (7) de la plaque porte-garniture (3).

2. Fixation de garniture de frein selon la revendication 1, **caractérisée en ce qu'**au moins un bossage (13), qui correspond au renflement (8), est prévu du côté de bordure de la plaque porte-garniture (3) qui est tourné vers le ressort de retenue de garniture (6).

3. Fixation de garniture de frein selon la revendication 1 ou 2, **caractérisée en ce que** le bossage (13) est plus haut que la cote de coupe transversale associée du ressort de retenue de garniture (6).

4. Fixation de garniture de frein selon la revendication 2 ou 3, **caractérisée en ce que** deux bossages (13), entre lesquels le renflement (8) est logé, sont prévus.

5. Fixation de garniture de frein selon l'une des revendications 2 à 4, **caractérisée en ce que** les bossages (13) présentent chacun une rampe (15), le ressort de retenue de garniture (6) étant placé contre les rampes (15).

6. Fixation de garniture de frein selon la revendication 5, **caractérisée en ce que** les rampes (15) décrivent par ailleurs un tracé descendant depuis l'extrémité libre des bossages (13) en direction de la plaque porte-garniture (3).

7. Fixation de garniture de frein selon la revendication 1, **caractérisée en ce qu'**au moins une languette (9) est pourvue d'un trou oblong (14) dans lequel la branche (10) associée est guidée de manière translatable.

8. Fixation de garniture de frein selon la revendication 7, **caractérisée en ce que**, pour la modification de la courbe caractéristique d'amortissement du ressort de retenue de garniture (6), le trou oblong (14) respectif décrit un tracé horizontal ou courbe.

9. Fixation de garniture de frein selon l'une des revendications 7 ou 8, **caractérisée en ce que** le trou oblong (14) décrit un tracé en arc de cercle et est orienté avec sa partie concave vers le côté extérieur de la languette (9).

10. Fixation de garniture de frein selon l'une des revendications 7 à 9, **caractérisée en ce que** la largeur du trou oblong (14) correspond approximativement à la cote de coupe transversale associée de la branche (10).

11. Fixation de garniture de frein selon l'une des revendications 1 à 10, **caractérisée en ce que** le ressort de retenue de garniture (6) est maintenu au niveau des languettes (9) par des éléments d'arrêt qui sont fixés aux branches (10) par complémentarité de forme ou par adhérence de matière.

12. Fixation de garniture de frein selon l'une des revendications 2 à 6, **caractérisée en ce que** le ressort de retenue de garniture (6) est placé contre les bossages (13) du côté opposé à la garniture de friction (4).

13. Fixation de garniture de frein selon la revendication 1, **caractérisée en ce que** le renflement (8) s'étend vers la garniture de friction (4).

14. Fixation de garniture de frein selon la revendication 1, **caractérisée en ce que** l'arceau de retenue de garniture (7) est pourvu, dans la zone de chevauchement avec les ressorts de retenue de garniture (6), respectivement d'au moins une patte (12), les pattes (12) s'avançant dans l'espace limité par le renflement (8).

15. Fixation de garniture de frein selon la revendication 1, **caractérisée en ce que** l'arceau de retenue de garniture (7), au niveau d'une extrémité insérée dans une poche (17) de l'étrier de frein (1), est formé au sens d'un codage qui correspond à la poche (17) adaptée à celle-ci.

16. Fixation de garniture de frein selon la revendication 15, **caractérisée en ce que** l'extrémité de l'arceau de retenue de garniture (7) qui est logée dans la poche (17) présente un chanfrein (18) disposé du côté longitudinal, tandis que la poche (17) dans la zone associée est chanfreinée de manière adaptée à celle-ci.

17. Garniture de frein pour un frein à disque, en particulier d'un véhicule utilitaire, comprenant une plaque porte-garniture (3), une garniture de friction (4) reliée à celle-ci ainsi qu'un ressort de retenue de garniture (6) maintenu d'un côté de bordure de la plaque porte-garniture (3), sachant que le ressort de retenue de garniture (6) est fabriqué à partir d'un fil de ressort,
**caractérisé en ce que**
le ressort de retenue de garniture (6) est maintenu au niveau de la plaque porte-garniture (3) de manière à ne pas pouvoir se perdre et présente dans la zone du milieu un renflement (8) formé perpendiculairement à la direction de déviation à amortir et **en ce que** des languettes (9), dans lesquelles sont logées des branches (10) du ressort de retenue de garniture (6) qui sont coudées aux extrémités, sont formées au niveau de la plaque porte-garniture (3).

18. Garniture de frein selon la revendication 17, **caractérisée en ce que** la plaque porte-garniture (3) présente au moins un bossage (13) de son côté de bordure tourné vers le ressort de retenue de garniture (6).

19. Garniture de frein selon la revendication 17 ou 18, **caractérisée en ce que** deux bossages (13) disposés à distance l'un de l'autre, entre lesquels le renflement (8) est logé, sont prévus.

20. Garniture de frein selon l'une des revendications 17 à 19, **caractérisée en ce que** les bossages (13) sont, d'un côté, pourvus d'une rampe (15), les rampes (15) descendant par ailleurs depuis leur extrémité libre en direction de la plaque porte-garniture (3).

21. Garniture de frein selon la revendication 17, **caractérisée en ce qu'**au moins une des languettes (9) présente un trou oblong (14) qui s'étend en direction longitudinale du ressort de retenue de garniture (6).

22. Garniture de frein selon la revendication 17, **caractérisée en ce que** la hauteur des bossages (13) est supérieure à la cote de coupe transversale associée du ressort de retenue de garniture (6).

23. Garniture de frein selon la revendication 17, **caractérisée en ce que** le renflement (8) s'étend vers la garniture de friction (4).

24. Garniture de frein selon la revendication 20, **caractérisée en ce que** les rampes (15) sont prévues du côté des bossages (13) qui est opposé à la garniture de friction (4).
